# EUROPEAN PATENT APPLICATION

(11) **EP 0 544 303 A2**
(43) Date of publication of application: **02.06.1993**
(21) Application number: 92120217.2
(22) Date of filing: 26.11.1992
(51) Int. Cl.: C08L 71/02, C08K 3/38, C08J 3/205

(54) **Slurries of water-soluble polymers**

(30) Priority: 27.11.1991 US 799170
(71) Applicant: UNION CARBIDE CHEMICALS & PLASTICS TECHNOLOGY CORPORATION, Danbury, Connecticut 06817-0001 (US)
(72) Inventor: Meyer, Robert Rosen, East Brunswick, New Jersey 08816 (US); Bracco, Anthony Charles, Howell, New Jersey 07731 (US); Eager, Robert Gouldman, Bridgewater, New Jersey 08807 (US)
(74) Representative: Barz, Peter, Dr.

(57) **Abstract**

Slurry compositions containing water-soluble poly(ethylene oxide) polymers are provided which contain a water-miscible, organic, liquid vehicle, and a hydrophobically-modified, hydrophilic, particulate material. Upon shearing, the particulate material exhibits surface active properties and can impart high viscosity and pseudoplastic characteristics to the slurry, thereby making the slurry stable, pourable and pumpable.

## Description

This invention relates to slurries of water soluble polymers. More specifically, this invention relates to slurries of poly(ethylene oxide) polymers which contain a hydrophobically-modified, hydrophilic, particulate material and which can have enhanced stability, pourability and pumpability.

Water-soluble polymers, particularly of relatively high molecular weight, have been used for a variety of applications. For example, there is a substantial demand for such polymers in paper fines retention, waste water treatment, flocculation, lubricants, fluorescent tube manufacture, rice paper manufacture, adhesives, cosmetics and toiletries, denture adhesives, rock drilling, underground coal mining, conduit lubricants and fire fighting formulations. Unfortunately, such polymers can be quite difficult to dissolve in water. Poly(ethylene oxide) is typical of such materials since the dry powder has a tendency to clump easily when rapidly combined with water. Although the clumping tendency can be somewhat minimized by slowly adding the polymer to the water, clumping tendencies nevertheless still exist making this technique undesirable. The clumps usually consist of a wet sticky outer surface surrounding a dry powder center. Once formed, these clumps are difficult or impossible to dissolve.

Various methods have been proposed to provide vehicles to aid in dispersing water soluble polymers and produce slurries having improved flow properties for better handling. The following patents describe some of the methods previously proposed.

U.S. Patent No. 3,736,288, issued to Stratta, et al., discloses hydrodynamic drag reducing formulations which comprise (a) particulate ethylene oxide polymer, (b) an inert, normally-liquid, water-miscible, organic vehicle which is a non-solvent for said ethylene oxide polymer such as propylene glycol, (c) a suspending agent which is non-reactive with said ethylene oxide polymer and said organic vehicle, such as colloidal silica, and (d) a surface-active agent. It is further disclosed that the use of the surface-active agent results in systems which are characterized by their improved handling characteristics such as fluidity, pumpability, and/or pourability. In addition, it is disclosed that the surface-active agent comprises a hydrophobic moiety and a hydrophilic moiety. Ethoxylated fatty acids, ethoxylated fatty acid amides, alkanolamines and polysiloxane-polyalkylene compounds are specially disclosed as surface-active agents.

U.S. Patent No. 3,843,589, issued to Wartman, discloses stable, pumpable slurries of ethylene oxide polymers in liquid media, which comprise (a) a particulate ethylene oxide polymer having a density of about 1.15 to about 1.26, and (b) an inert liquid vehicle, which is a non-solvent for said ethylene oxide polymer, having a density of about 96.5 percent to 103.5 percent of the density of said ethylene oxide polymer. It is further disclosed that the vehicle is a mixture of two mutually soluble liquids or a solution of a solid in a liquid provided that it is a non-solvent for the ethylene oxide polymer and is miscible in water, and further provided that the volume of liquid vehicle used per unit volume of polymer powder exceeds the void volume of ethylene oxide polymer by at least 3 percent but by not more than 500 percent.

U.S. Patent No. 4,016,894, issued to Baldwin, et al., discloses that drag in turbulent aqueous streams can be reduced by a powder composition of a finely divided hydroscopic drag reducing powder, for example, poly(ethylene oxide), and a colloidal size hydrophobic powder, for example, an organosilicon-modified colloidal silica, and an inert filler such as sodium sulphate. It is further disclosed that the powder composition is injected into the turbulent stream by first mixing the powder with water to form a slurry and immediately thereafter drawing the slurry through an eductor into a recycle stream between the downstream and upstream ends of a pump for the turbulent stream. Moreover, it is disclosed that the hydrophobic powder synergistically aids in the dissolution process by keeping the hygroscopic particles separated through the dissolution process.

U.S. Patent No. 4,325,861, issued to Braun, et al., discloses that water-soluble polymers can be rapidly dissolved by employing a concentrate of (i) a water-soluble, particulate polymer, (ii) a water-insoluble, organic vehicle which is a non-solvent for the polymer, (iii) a nonionic surfactant having an HLB in the ranges of 3-5 and 9-13 and if necessary, a particulate material.

U.S. Patent No. 4,883,536, issued to Burdick, discloses an aqueous suspension comprising 15% or more, by total weight of the suspension, of at least one anionic or nonionic, water-soluble polymer dispersed in an aqueous solution of an ammonium salt having a multivalent anion, wherein the weight ratio of the ammonium salt to the water is at least 0.15. It is further disclosed that the suspensions can be improved by mixing the solution in a vacuum, so as to remove entrained air.

Although the slurry compositions described above have been useful, new slurry compositions having improved properties, i.e., stability, pourability and pumpability, are desired. In general, increased stability can be obtained by increasing the viscosity of the slurry. However, increasing the viscosity of the slurry generally results in reducing the pourability and pumpability of the slurry. Accordingly, new compositions which have high viscosity and high pseudoplasticity are desired. Furthermore, new slurry compositions which can be made with fewer ingredients or multifunctional ingredients are desired. Since vacuum operations can be prohibitively expensive on a commercial scale, new slurry compositions which do not require mixing under vacuum conditions are also desired.

By this invention slurry compositions of poly(ethylene oxide) are provided which contain a particulate material which exhibits surface-active properties when subjected to shearing in the presence of a liquid vehicle. The particulate material comprises hydrophobically-modified, hydrophilic particles. As a result of using the particulate materials of the present invention, the slurry compositions can have a high degree of stability by virtue of their high viscosity (measured at low shear rate) and a high degree of pumpability and pourability by virtue of their pseudoplastic properties. In addition, there is no need to mix the slurry compositions of the present invention under vacuum conditions.

In one aspect of the present invention, there is provided a slurry composition comprising: (a) a water-soluble, poly(ethylene oxide) polymer; (b) a water-miscible, organic, liquid vehicle which is at least substantially a non-solvent for the polymer; and (c) a hydrophobically-modified, hydrophilic, particulate material which exhibits surface-active properties when subjected to shearing in the presence of the liquid vehicle.

In another aspect of the present invention, there is provided a method of making a slurry containing water-soluble, poly(ethylene oxide) polymer. The method comprises: (a) shearing a mixture containing a water-miscible, organic, liquid vehicle which is at least substantially a non-solvent for the poly(ethylene oxide) polymer, and a hydrophobically-modified, hydrophilic particulate material under conditions effective to cause the particulate material to exhibit surface-active properties; and (b) combining the poly(ethylene oxide) polymer with the mixture.

The poly(ethylene oxide) polymers of the present invention are ethylene oxide polymers which are water-soluble. The ethylene oxide polymers include, for example, homopolymers of ethylene oxide and copolymers of ethylene oxide with one or more polymerizable olefin oxide comonomers. The particular comonomer, when used in accordance with the present invention, is not critical and may contain hydrocarbon substituents such as alkyl, cycloalkyl, aromatic, alkene and branched alkyl groups. However, the amount of comonomer, e.g., 1,2-propylene oxide, must not exceed that which would cause the poly(ethylene oxide) to become insoluble in water. Typical olefin oxide comonomers include 1,2-propylene oxide, 2,3-butylene oxide, 1,2-butylene oxide, styrene oxide, 2,3-epoxy hexane, 1,2-epoxy octane, butadiene monoxide, cyclohexene monoxide, epichlorohydrin, and the like. The preparation of ethylene oxide polymers is well documented in the literature; see, for example, U.S. Patent Nos. 2,969,403, issued to Helmut, et al.; 3,037,943, issued to Bailey, et al.; 3,167,519, issued to Bailey, et al.; 4,193,892, issued to Geoke, et al.; and 4,267,309, issued to Geoke, et al.

Preferably, the poly(ethylene oxide) polymer has an average molecular weight greater than about 100,000 and more preferably has an average molecular weight between 100,000 and 10,000,000 grams per gram mole. The average particle size of the polymer is not critical, but is preferably from about 0.01 microns to 1000 microns and more preferably from about 50 to 250 microns.

The concentration of the poly(ethylene oxide) polymers in the slurries of the present invention can be varied over a wide range. The minimum limit can be as low as about 5 weight percent, and lower, based on the total slurry weight. At such low concentrations, however, the dilute character of the slurry requires large storage capacity and the stability is often poor. On the other hand, concentrations as high as 99 weight percent polymer can be used. The rheology of slurries containing polymer in low concentrations resembles fluids, while the rheology of slurries containing polymer in high concentrations resembles flowable powders. Preferably the polymer concentrations are in the range of from about 10% to about 99% based on the total weight of the slurry. More preferably, the polymer concentrations in the slurry range from about 10 to about 50 weight percent based on the total weight of the slurry, and most preferably from about 30 to about 45 weight percent.

The poly(ethylene oxide) polymers of the present invention are available from a variety of sources, such as, for example; POLYOX® WATER SOLUBLE RESINS available from Union Carbide Chemicals and Plastics Company Inc., Danbury, Ct; PEO RESINS available from Sumitomo Seika, Osaka, Japan; and ALKOX® RESINS polymers available from Meisei Chemical Works, Ltd., Kyoto, Japan.

The vehicles of the present invention include any water-miscible, organic, liquid or mixtures of liquids which are at least substantially a non-solvent for the poly(ethylene oxide) polymer at room temperature, i.e., they may cause some swelling of the polymer. The vehicles used in the present invention can be comprised of compounds which contain carbon, hydrogen, and oxygen atoms, said oxygen atoms being in the form of alcoholic hydroxylic oxygen (-OH), and/or aliphatic etheric oxygen (-0-). The term "alcoholic hydroxylic oxygen," as used herein, means oxygen in the form of a hydroxyl group which group is monovalently bonded to an acyclic aliphatic or cycloaliphatic carbon atom. Preferably, the vehicles are capable of inducing surface activity in the particulate material when the particulate material is subjected to shearing in the presence of the liquid vehicle.

Preferably, vehicles for use in accordance with the present invention include alkanediols, as exemplified by propylene glycol, 1,3-butylene glycol, 1,4-butylene glycol, 1,6-hexylene glycol, ethylene glycol, diethylene glycol, triethylene glycol, 2-methylpentane-2,4-diol, octane-1,2-diol, polypropylene glycol, and the like. Also preferred are mixtures of alkanediols with minor amounts, e.g., from about 1 to 10 weight percent based on the total weight of the slurry, of polyhydroxy compounds such as, for example, glycerol, polypropylene glycol, liquid and solid polyethylene glycol, hexane-1,2,3,4,5,6-hexol, erythritol butane-1,2,3,4-tetrol, pentaerythritol, ethylene carbonate and ethylene chlorohydrin. The concentration of liquid vehicle in the slurry is preferably from about 30 to 90 weight percent based on the total weight of the slurry.

In a preferred aspect of the invention, the liquid vehicle preferably has a slight affinity for the poly(ethylene oxide) polymer, but not enough affinity to dissolve it. Thus, the liquid vehicle may cause some swelling of the polymer in the slurry. It has been found that glycerol has some affinity for poly(ethylene oxide) polymer and thus is preferred as a component in the liquid vehicle of the present invention. In this aspect of the invention, it is most preferred that glycerol comprises a minor amount of the liquid vehicle and an alkanediol, e.g., propylene glycol, comprises a major amount of the liquid vehicle. When the liquid vehicle comprises propylene glycol and glycerol, in general, the weight ratio of glycerol to propylene glycol is from about 0.01:1 to about 0.5:1, preferably from about 0.01:1 to about 0.2:1 and more preferably from about 0.05:1 to about 0.15:1. Further, when the liquid vehicle comprises propylene glycol and glycerol it is preferred that the slurry composition comprises from about 2 to about 10 weight percent glycerol based on the total weight of the slurry and from about 30 to about 80 weight percent of propylene glycol based on the total weight of the slurry. The compounds which comprise the liquid vehicles of the present invention are well known to those skilled in the art and commercially available.

The particulate material of the present invention comprises any hydrophilic particles which have been modified to be at least partially hydrophobic and which exhibit surface-active properties when subjected to shearing in the presence of the liquid vehicle. Without being bound to any particular theory, it is believed that upon shearing the particulate material used in the present invention, hydrophilic and hydrophobic surfaces become exposed in the liquid vehicle and thus exhibit surface active properties. As a result, the slurries of the present invention often exhibit unusual rheological properties which are believed to be responsible for their desirable combination of stability, dissolvability, pourability and pumpability.

It is preferred that the particulate material is capable of promoting frothing when the particulate material and liquid vehicle are subjected to shearing. It is believed that the frothing is associated with the surface activity and the presence of air (or other gas) in the mixing environment. The presence of gas, i.e., micro-bubbles, in the slurry is believed to impart compressibility to the slurry which may contribute to the unexpectedly enhanced rheological properties of the slurry compositions of the present invention. Thus, in a preferred aspect of the present invention, the slurry comprises gas bubbles, and more preferably air bubbles.

In addition to the properties described above, the particulate material is preferably one that is compatible with the slurry and non-reactive with the polymer. Preferably, small amounts of the particulate material will have the ability to greatly thicken the liquid vehicle and/or to coat the polymer thereby preventing stratification of the polymer over extended periods of time, such as during storage and transit. Thus, preferably the particulate material is also a thickening agent.

Preferably, the particulate materials used in the present invention comprise materials which are insoluble in the liquid vehicle and more preferably comprise at least one particulate metal or metalloid oxide powder such as, for example, silica, alumina, alumina hydrates or clay, modified by a reaction with a hydrophobic, silicon-containing compound, particularly an organosilicon compound. Typical organosilicon compounds which can be used to treat the hydrophilic substrate of the particulate material include silyl, silane, or siloxane compounds, having from one to about three alkyl, aryl, alkaryl or aralkyl hydrocarbon groups which, in turn, have from 1 to about 8 carbon atoms per group and up to about 3 halogen atoms per group. Examples of suitable particulate materials of the present invention include, trimethylsilyl-modified silicon dioxide, trimethylsiloxy-modified silicon dioxide, trimethylsiloxyl-modified silicon dioxide and dimethyldichlorosilane-modified silicon dioxide. Suitable particulate materials also include those described in U.S. Patent No. 3,592,679 issued to Tully, et al. and U.S. Patent No. 4,102,703 issued to Tully. A preferred particulate material is dimethyldichlorosilane-modified fumed silicon dioxide.

Processes for treating hydrophilic materials with organosilicon compounds are well known. Furthermore, hydrophobically-modified, hydrophilic materials which are suitable for use as particulate materials in the present invention are readily commercially available. For example, one dimethyldichlorosilane-modified silicon dioxide material available from the DeGussa Company of Teterboro, New Jersey, is Sipernet® D-17. Other hydrophobically-modified silicas available from the DeGussa Company include Aerosil® R972 and R812. Additionally, the Cabot Corporation, Tuscola, Illinois, sells various treated silica products, such as, for example, Cab-o-Sil® TS-530, Cab-o-Sil TS-610 and Cab-o-Sil TS-720 treated fumed silicas, and Solem Industries, Norcross, Georgia, sells a silane-treated alumina trihydrate and a hydrophobically-modified magnesium oxide.

When hydrophobically-modified silica is used as the particulate material, it is preferred that the particulate material be present in an amount from about 0.1 to 10 weight percent based on the total weight of the slurry, more preferably from about 0.2 to about 5 weight percent, and most preferably from about 0.5 to 2.0 weight percent. Furthermore, in accordance with the present invention, either fumed or precipitated, hydrophobically-modified silica is preferred, and hydrophobically-modified, fumed silica is more preferred.

The slurry compositions of the present invention can also contain additional ingredients, such as biocides, other polymers (either soluble or insoluble in the liquid vehicle), dyes or colors, and perfumes. Since the slurry compositions of the present invention can experience frothing or foaming when the particulate material is sheared, it is occasionally desirable to incorporate an antifoam into the slurry. Various antifoams including silicone-based, alcohol-based, and glycol-based antifoams are well known and commercially available. Typically, when an antifoam is employed in the slurry compositions of the present invention, the concentration is preferably from about 5 to about 5,000 parts per million based on the total weight of the slurry and more preferably from about 10 to about 1,000 parts per million.

High yield stress is a characteristic of the slurries of the present invention which is believed to be associated with the stability of the slurries. Quite unexpectedly, high shear thinning is also a characteristic of the slurries of the present invention. The enhanced pourability and pumpability of the slurries is believed to be associated with the high shear thinning characteristic, despite the fact that the slurries have high yield stress. Thus, high concentrations of polymer, e.g., 35 weight percent based on the total weight of the slurry and higher, can be employed while retaining good pourability and pumpability.

The slurry compositions of the present invention are preferably made by shearing a mixture of the liquid vehicle and the particulate material under conditions effective to cause the particulate material to exhibit surface active properties in the liquid vehicle, and combining the poly(ethylene oxide) polymer with the mixture. The poly(ethylene oxide) polymer can be combined with the mixture either before, simultaneously with, or subsequent to the shearing step. The polymer can be combined with the mixture by, for example, adding the polymer to the mixture or adding the mixture to the polymer.

In general, the techniques and apparatus required for shearing are generally known in the art. For example, a Greerco Homomixer available from Greerco Corp., Hudson, New Hampshire, can be used to shear the mixture. However, the shearing must be sufficient to comminute the particles of the particulate material to expose hydrophobic and hydrophilic surfaces.

It is desirable to maintain the poly(ethylene oxide) polymer of the present invention at or below about 40°C during the manufacture of the slurry in order to prevent fusing of the polymer. Thus, if the shearing step is performed prior to combining the mixture of the liquid vehicle and the particulate material with the poly(ethylene oxide) polymer, then the temperature during the shearing step can exceed 40°C. However, the temperature of the mixture should be lowered to less than about 40°C before the polymer is added. When the polymer is combined with the mixture prior to the shearing step, it is preferred that the temperature be maintained below about 40°C during the shearing step. As is known in the art, the time period required to complete the shearing is dependent upon the temperature that is achieved during the shearing.

In accordance with the present invention, effective conditions during the shearing step include providing an energy level sufficient to comminute the particles so that hydrophobic and hydrophilic surfaces will be exposed. In addition, the effective conditions include a time period and temperature sufficient to yield a well dispersed stable slurry. The term "stable slurry" as used herein, means a slurry that remains dispersed, i.e., resists sedimentation, for at least one week, preferably for at least one month, and most preferably for at least six months. Furthermore, it is preferred that the shearing be conducted under non-vacuum conditions in order to permit the introduction of gas, e.g., air or nitrogen, into the slurry.

The slurry compositions of the present invention can be used in any application where an aqueous solution of poly(ethylene oxide) polymer is ultimately desired. Typical uses for the slurry compositions of the present invention include, paper fines retention, waste water treatment, flocculation, lubricants, fluorescent tube manufacture, rice paper manufacture, adhesives, cosmetics and toiletries, denture adhesives, rock drilling, underground coal mining, conduit lubricants and fire fighting formulations.

The following examples are provided for illustrative purposes and are not intended to limit the scope of the claims that follow.

### Examples

In the following examples, three methods were used to prepare the slurries of the present invention:

### Method A

All the liquid and solid ingredients are sheared together in a high shear Cowles Dissolver. The temperature should not exceed 40°C or the polymer particles may begin to fuse together and decreased stability, or in the extreme, gellation may occur.

### Method B

All the liquids are first sheared with the particulate material in a high shear Waring Blender. Then, incremental addition of the polymer is carried out, with short periods (several seconds) of high shear to wet the polymer. After the polymer is wetted, shearing is continued for about 2 minutes or until the slurry has the desired consistency. The temperature is checked periodically and should not exceed 40°C.

### Method C

All the liquids and the particulate material are sheared for about 15 minutes in a high shear Waring Blender. The mixture is cooled to below 40°C, and then about 1/3 of the polymer is added to the blender. Finally, the resulting material is transferred to a low shear Hobart bowl and the remaining 2/3 of the polymer is added.

The following materials were used in the examples:
- Polymer 1 -: a poly(ethylene oxide) homopolymer having a molecular weight of about 8x10⁶ grams per gram mole; commercially available as POLYOX® WSR FRA from Union Carbide Chemicals and Plastics Company Inc., Danbury, CT.
- Polymer 2 -: a poly(ethylene oxide) homopolymer having a molecular weight of about 4x10⁶ grams per gram mole; commercially available as POLYOX® WSR 301 from Union Carbide Chemicals and Plastics Company Inc., Danbury, CT.
- Polymer 3 -: a poly(ethylene oxide) homopolymer having a molecular weight of about 0.4x10⁶ grams per gram mole; commercially available as POLYOX® WSR N-3000 from Union Carbide Chemicals and Plastics Company Inc., Danbury, CT.
- Polymer 4 -: a nonionic polysaccharide polymer; commercially available as Guar Gum from Aldrich Chemical, Inc., Milwaukee, WI.
- Polymer 5 -: a partially acetylated hetero-polysaccharide having a molecular weight of 1x10⁶ grams per gram mole; commercially available as Xanthan Gum from the Kelco Division of Merck and Co., Inc., San Diego, CA.
- Polymer 6 -: an ultra-high molecular weight nonionic poly(acrylamide) polymer; commercially available as Percol 333 from Allied Colloids Inc., Suffolk, VA.
- Polymer 7 -: an ultra-high molecular weight anionic poly(acrylamide) polymer; commercially available as Percol 336 from Allied Colloids Inc., Suffolk, Va.
- Polymer 8 -: a cationic hydroxyethyl cellulose polymer having a viscosity of 1000 to 2500 centipoise with a 1 weight percent solution using a Brookfield LVF viscometer at 30 rpm, spindle 3; commercially available as Polymer JR 30M from Union Carbide Chemicals and Plastics Company Inc., Danbury, CT.
- Polymer 9 -: a hydroxyethyl cellulose polymer having a viscosity of 4800 to 6000 centipoise with a 1 weight percent solution using a Brookfield LVF viscometer at 60 rpm, spindle 4; commercially available as HEC QP 4400 from Union Carbide Chemicals and Plastics Company Inc., Danbury, CT.
- Particulate Matter 1 -: a hydrophobic fumed silica; commercially available as Cab-o-Sil® TS-720 from Cabot Corporation, Tuscola, Illinois.
- Particulate Matter 2 -: a hydrophilic fumed silica; commercially available as Cab-o-Sil® HS-5 from Cabot Corporation, Tuscola, Illinois.
- Particulate Matter 3 -: a hydrophobic precipitated silica; commercially available as Sipernet® D-17 from DeGussa Corp., Teterboro, New Jersey.
- Antifoam -: a silica-filled, silicone oil antifoam; commercially available as SAG® 30 antifoam from Union Carbide Chemicals and Plastics Company Inc., Danbury, CT.

In order to evaluate the stability, pourability and pumpability of the slurries, a Brookfield RVT or RVF viscometer with a Helipath Stand and either a T-Bar Spindle B or C (hereinafter referred to as "RVT-B", "RVT-C", "RVF-B" or "RVF-C") was used to measure dial readings at various revolutions per minute ("rpm"). Pumpability and pourability is associated with a high degree of pseudoplasticity. In the Examples, pseudoplasticity was evidenced by stable dial readings over a range of rpm's. Stability is associated with high yield stress and was evidenced by dial readings above about 30 at low rpm, i.e., at or below about 10, and by visual inspection over time. Dial readings higher than about 75 were indicative of an excessively high viscosity.

The T-Bar Spindle "B" had a 36.4 mm crossbar length. The T-Bar Spindle "C" had a 27.1 mm crossbar length.

### Example 1

A slurry was prepared by mixing glycerol, propylene glycol, particulate material and antifoam together in a Waring Blender and mixed for 15 minutes. The final temperature was 45°C. The mix was allowed to cool to 38°C and about 1/3 of the polymer was added. The mix was sheared for 1 minute and thickened slightly. The temperature was 39.5°C. The remaining 2/3 of the polymer was then added to the mix which was removed from the Waring Blender and put into a Hobart bowl mixer on medium speed for 10 minutes (i.e., Method C).

The slurry had the following composition:

| | Weight % |
|---|---|
| Polymer 1 | 36.0 |
| Glycerol | 3.0 |
| Propylene Glycol | 60.0 |
| Particulate Material 1 | 0.50 |
| Antifoam, ppm | 0.05 |

Rheological data obtained with RVT-C was:

| RPM | Dial Reading |
|---|---|
| 2.0 | 45 ± 15 |
| 4.0 | 52 ± 14 |
| 10.0 | 50 ± 12 |

The slurry had a glycerol/propylene glycol ratio of 0.05:1 and resisted sedimentation for more than 53 days at room temperature.

### Example 2

A slurry was made in the same manner as that described in Example 1. The slurry had the following composition:

| | Weight % |
|---|---|
| Polymer 1 | 36.0 |
| Glycerol | 9.5 |
| Propylene Glycol | 54.0 |
| Particulate Material 1 | 0.5 |
| Antifoam, ppm | 0.05 |

Rheological data obtained with RVT-B was:

| RPM | Dial Reading |
|---|---|
| 2.0 | 49 ± 12 |
| 4.0 | 52 ± 10 |
| 10.0 | 55 ± 8 |

This slurry had a glycerol/propylene glycol ratio of 0.15 and was stable for more than 3 weeks.

### Example 3

A slurry was prepared by mixing all the liquid ingredients together with the polymer and shearing for 20 minutes with a high shear Cowles Dissolver (i.e., Method A). The final temperature was 38.5°C.

The slurry had the following composition:

| | Weight % |
|---|---|
| Polymer 1 | 36.0 |
| Glycerol | 6.0 |
| Propylene Glycol | 57.0 |
| Particulate Material 1 | 0.95 |
| Antifoam, ppm | 0.05 |

Rheological data obtained with RVT-C was:

| RPM | Dial Reading |
|---|---|
| 0.5 | 39 ± 4 |
| 1.0 | 35 ± 5 |
| 2.5 | 33 ± 8 |
| 5.0 | 29 ± 7 |
| 10.0 | 35 ± 5 |

The slurry had a glycerol/propylene glycol ratio of 0.1 and resisted sedimentation for more than 1 month at room temperature. The rheological data demonstrates the presence of a high yield stress on shearing. Such behavior produces good resistance to sedimentation while at the same time, allows pumpability and pourability. The data also demonstrates that the slurries of the present invention can be prepared by shearing the particulate material together with all the liquids and the polymer at the same time.

### Example 4

A slurry was prepared with a glycerol/propylene glycol ratio of 0.1. The composition was the same as that of Example 3 except that Polymer 2 was used. The method for preparing the slurry of Example 4 was the same as that described in Example 1.

Rheological data obtained with RVF-B was:

| RPM | Dial Reading |
|---|---|
| 2.0 | 33 ± 6 |
| 4.0 | 40 ± 6 |
| 10.0 | 46 ± 10 |

The slurry was stable for more than 3 weeks.

### Example 5

A slurry was prepared using Method C with Polymer 3. The composition was as follows:

| | Weight % |
|---|---|
| Polymer 3 | 36.0 |
| Glycerol | 6.0 |
| Propylene Glycol | 57.5 |
| Particulate Material 1 | 0.5 |
| Antifoam, ppm | 0.05 |

Rheological data obtained with RVF-B was:

| RPM | Dial Reading |
|---|---|
| 2.0 | 30 ± 5 |
| 4.0 | 36 ± 7 |
| 10.0 | 45 ± 9 |

The slurry was stable for more than 3 weeks.

### Example 6

A slurry was prepared with the same composition as that of Example 1. The slurry was prepared by shearing the particulate material together with all the liquid components and without the polymer. This was done for 3 minutes and the final temperature was 35.5°C. Thereafter, aliquots of polymer were incrementally added and the mixture was sheared for about 15 seconds each time, or until the mixture became homogeneous (i.e., Method B). After six incremental polymer additions, the slurry was complete. This slurry was stable for about 28 days.

Example 6 demonstrates the slurries of this invention can be prepared by first shearing the liquid vehicle with the particulate material followed by incremental addition of the polymer.

### Example 7

Mixtures of particulate material and liquid vehicle (propylene glycol/glycerol, 1:1 ratio) were sheared to determine the surface activity of the particulate materials. It was observed that foaming occurred after shearing Particulate Material 1. This suggested Particulate Material 1 had surface activity when subjected to high shear in glycerol/propylene glycol mixtures. By contrast, no foaming was observed when Particulate Material 2 was used in the identical experiment.

### Example 8

Two slurries having the following composition were prepared using Method A. One was made with Particulate Material 1 and the other was made with Particulate Material 2.

| | Weight % |
|---|---|
| Polymer 1 | 36.0 |
| Propylene glycol | 63.0 |
| Particulate Material 1 or 2 | 1.0 |
| Antifoam, ppm | 0.0005 |

Rheological data obtained using RVT-B was:

| Hydrophobic Silica Particulate Material 1 | | | Hydrophilic Silica Particulate Material 2 | | |
|---|---|---|---|---|---|
| RPM | Dial Reading | +/- | RPM | Dial Reading | +/- |
| 0.5 | 44 | 2 | 0.5 | 7 | 0.5 |
| 1.0 | 52 | 5 | 1.0 | 11 | 1 |
| 2.5 | 50 | 10 | 2.5 | 15 | 2 |
| 5.0 | 52 | 7 | 5.0 | 24 | 2 |
| 10.0 | 75 | 10 | 10.0 | 33 | 2 |

It can be seen that much higher shear stress data (i.e., dial readings) were obtained with the hydrophobic silica than with the hydrophilic silica. High shear stress data, especially at low shear (i.e., low rpm), is suggestive of a more stable slurry.

### Example 9

Propylene glycol with 0.5% weight Particulate Material 1 was shaken together. No foam or bubbles were observed. The dispersion was turbid.

### Example 10

Glycerol was mixed with propylene glycol such that the ratio of glycerol to propylene glycol was 0.05:1, and 0.5% weight Particulate Material 1 was added. The suspension was turbid and no bubbles were seen even under microscopic examination.

### Example 11

The suspension of Example 10 was sheared in a Waring Blender (high shear) for 3 minutes in one-minute increments. After one minute of shearing, stable microbubbles were observed. These were easily visible to the eye. A foam in the sense of bubbles piling up out of the body of liquid was not observed.

From Examples 9 to 11, it was theorized that the hydrophobic silica was compatible with the liquid vehicle, but it was not surface active until high shear comminuted the particles. The particle fragments acquired a surfactant-like character because portions were already hydrophobic from the prior surface treatment and the freshly formed surface portions were hydrophilic.

It would appear that upon the addition of polymer particles to form a slurry, the microbubbles (which were apparently formed by the surface active silica fragments frothing the liquid vehicle) would be entrapped within the interstices of the dispersed polymer particles. Thus, the effective volume fraction of dispersed phase can be greatly increased (i.e., the poly(ethylene oxide) particles occupy volume in addition to that occupied by the dispersed microbubbles). Hence, the extreme and unusual pseudoplasticity of the slurries of the present invention appear to be associated with the fact that a portion of the dispersed phase(s) is a compressible fluid (i.e., air).

### Example 12

Example 12 demonstrates that a hydrophobic precipitated silica was effective. A slurry was prepared with the same composition as that of Example 3, except that Particulate Material 1 was replaced with Particulate Material 3. The slurry was checked for stability after 4 days and was stable. It is believed that the slurry was stable for at least 3-4 weeks.

### Example 13

Example 13 demonstrates that guar gum could not be substituted for poly(ethylene oxide). A slurry was prepared having the same composition as that of Example 1 using Method B, except for replacing Polymer 1 with Polymer 4. The resulting dispersion had minimal stability and separated in less than one day.

### Example 14

Example 14 demonstrates that xanthan gum could not be substituted for poly(ethylene oxide). A slurry was prepared with the same composition as that of Example 1 using Method B, except for replacing Polymer 1 with Polymer 5 . The resulting dispersion had minimal stability and separated in less than one day.

### Example 15

Example 15 demonstrates that an ultra-high molecular weight, non-ionic poly(acrylamide) could not be substituted for the poly(ethylene oxide). A slurry was prepared with a glycerol/propylene glycol ratio of 0.1 and the same composition as that of Example 3 using Method B, except for replacing Polymer 1 with Polymer 6. The resulting dispersion was pourable and grainy. It was stable for one day, but separated after 5 days with a liquid layer on top.

### Example 16

Example 16 demonstrates that an ultra-high molecular weight, anionic poly(acrylamide) could not be substituted for poly(ethylene oxide). A slurry was prepared with a glycerol/propylene glycol ratio of 0.1:1 and the same composition as that of Example 3 using Method B, except for replacing Polymer 1 with Polymer 7. No dispersion was obtained. Instead, a very viscous, viscolastic fluid resulted which suggested the polymer had dissolved in the liquid vehicle.

### Example 17

Example 17 demonstrates that a cationic hydroxyethyl cellulose could not be substituted for poly(ethylene oxide). A slurry was prepared with a glycerol/propylene glycol ratio of 0.1:1 and the same composition as that of Example 3 using Method B, except for replacing Polymer 1 with Polymer 8. The resulting material was a wet solid.

### Example 18

Example 18 demonstrates that a hydroxyethyl cellulose polymer could not be substituted for poly(ethylene oxide). A slurry preparation was attempted using Method B with a glycerol/propylene glycol ratio of 0.1:1 and the following composition:

| | Weight % |
|---|---|
| Polymer 9 | 15.0 |
| Glycerol | 7.75 |
| Propylene glycol | 76.70 |
| Particulate Material 1 | 0.5 |
| Antifoam, ppm | 0.05 |

The resulting material was solid at room temperature and unusable as a slurry.

### Example 19

This example demonstrates the effects of formulating the slurries under vacuum and non-vacuum conditions. Two slurries (Batch 1 and Batch 2) having the following composition were prepared by mixing the polymer and propylene glycol, adding the particulate material and shearing the mixture for 10 minutes in a high shear mixer, adding the polymer to the mixture and stirring for 5 minutes and shearing the slurry for 3 minutes.

| | Weight % |
|---|---|
| Polymer 1 | 36.0 |
| Glycerol | 5.7 |
| Propylene glycol | 57.3 |
| Particulate Material 1 | 1.0 |
| Antifoam, ppm | 0.05 |

Batch 1 was formulated at atmospheric conditions using air. Batch 2 was formulated under vacuum.

The density of Batch 1 was 1.048 kg/liter and the density of Batch 2 was 1.116 kg/liter. The concentration of air in Batch 1 was calculated to be about 6% based on volume. Batch 1 resisted sedimentation for more than 1 month. Batch 2 was unstable after about two days.

## Claims

1. A slurry composition comprising:
(a) a water-soluble, poly(ethylene oxide) polymer;
(b) a water-miscible, organic, liquid vehicle which is at least substantially a non-solvent for the polymer; and
(c) a hydrophobically-modified, hydrophilic, particulate material which exhibits surface-active properties when subjected to shearing in the presence of the liquid vehicle.

2. The composition of Claim 1 wherein the particulate material is present in an amount effective to promote frothing when the slurry is subjected to shearing.

3. The Composition of Claim 1 or 2 wherein the particulate material comprises silica which has been made at least partially hydrophobic by reaction with a hydrophobic silicon-containing compound.

4. The composition of any one of Claims 1-3 wherein the particulate material comprises from about 0.1 to about 10 weight percent of the slurry.

5. The composition of any one of Claims 1-4 wherein the liquid vehicle comprises a mixture of propylene glycol and glycerol.

6. A method of making a slurry containing a water-soluble, poly(ethylene oxide) polymer, said method comprising:
(a) shearing a mixture containing a water-miscible, organic, liquid vehicle which is at least substantially a non-solvent for the poly(ethylene oxide) polymer and a hydrophobically-modified, hydrophilic, particulate material under conditions effective to cause the particulate material to exhibit surface-active properties; and
(b) combining the poly(ethylene oxide) polymer with the mixture.

7. The method of Claim 6 wherein the poly(ethylene oxide) polymer is added to the mixture prior to step (a) and the effective conditions include a temperature not exceeding about 40°C.

8. The method of Claim 6 wherein the poly(ethylene oxide) polymer is added to the mixture subsequent to step (a) and the effective conditions include a temperature exceeding about 40°C.

9. The process of Claim 8 wherein the mixture is cooled to below about 40°C prior to the addition of the poly(ethylene oxide) polymer.
